# EUROPEAN PATENT SPECIFICATION

(11) **EP 2 544 329 B1**
(45) Date of publication and mention of the grant of the patent: **19.03.2014**
(21) Application number: 11173175.8
(22) Date of filing: 08.07.2011
(51) Int. Cl.: H02J 3/38, H02J 11/00

(54) **Method and arrangement for connecting a plurality of solar panel units to an inverter**
Verfahren und Anordnung zum Anschließen einer Vielzahl von Solartafeleinheiten an einen Wandler
Procédé et agencement pour connecter une pluralité d'unités de panneaux solaires sur un inverseur

(43) Date of publication of application: 09.01.2013
(73) Proprietor: ABB Oy, 00380 Helsinki (FI)
(72) Inventor: Pöyhönen, Simo, 00320 Helsinki (FI)
(74) Representative: Kolster Oy Ab

(56) References cited:
- EP-A2- 2 061 143
- DE-A1- 10 126 303

## Description

### FIELD OF THE INVENTION

The present invention relates to solar power arrangements and particularly to start-up situations in which solar panels are connected to an inverter.

### BACKGROUND INFORMATION

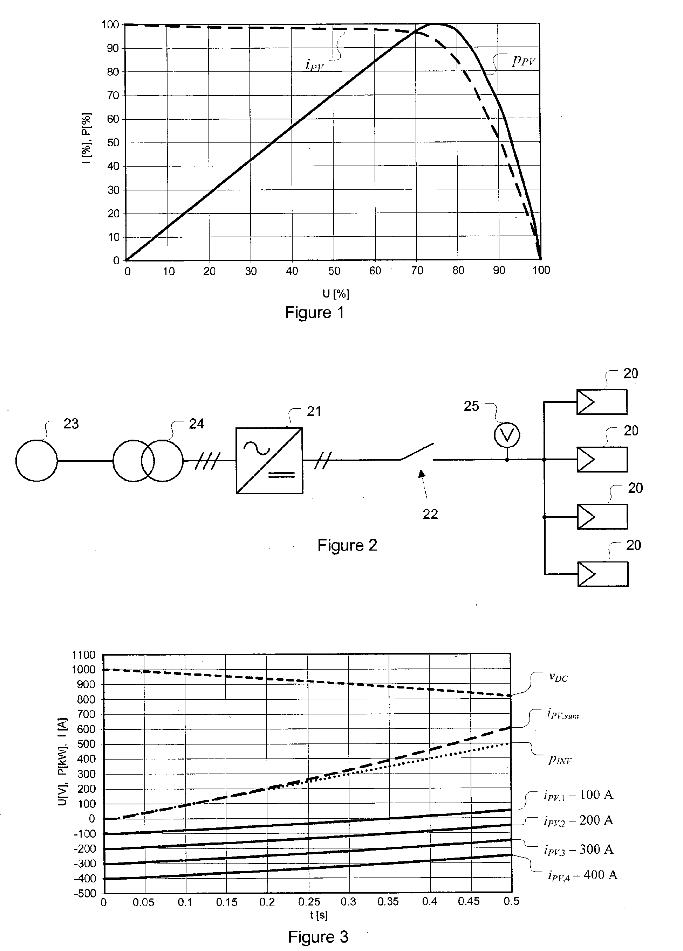

Solar power generation applications typically comprise an arrangement of solar panels producing a DC voltage and an inverter converting the DC voltage to an AC voltage which is then supplied to a grid. Figure 1 illustrates current and power curves of a typical solar panel. A power *p_{PV}* (solid line) and a current *i_{PV}* (dashed line) are represented as functions of solar panel voltage.

Figure 2 illustrates an exemplary embodiment of solar power generation. Four solar panel units 20 in parallel are connected to a DC link of an inverter 21 through a separating switch 22. Each solar panel unit 20 may comprise a plurality of solar panels. The inverter 22 supplies power to a grid 23 through a transformer 24. A voltage sensor 25 measures the voltage of the parallel connection of solar panel units 20.

When the solar panel units are being connected to an inverter at start-up, power supplied to the grid is often preferably ramped up in order to avoid large transients. A ramp-up may be achieved by controlling a DC link voltage of the inverter. Figure 3 illustrates a simulated start-up situation for the embodiment of Figure 2.

First, the DC link voltage *v_{DC}* is controlled to be same as the solar panel unit voltage. In Figure 3, an open-circuit voltage of the parallel-connected solar panel units is 1000 V. The voltages of the solar panel units act almost linearly within a range of 800 V to 1000 V, as they are modelled as voltage sources and series resistances. The panel units are then connected to the DC link. As the DC link voltage *v_{DC}* is equal to the solar panel unit voltage, no power is transferred.

Next, a voltage controller of the inverter is used to lower the DC link voltage so that a current *i*_{*PV*,*sum*} starts to flow from the solar panel unit to the inverter. The current *i_{PV,sum}* is a sum of panel unit currents *i*_{*PV.*1} to *i*_{*PV*.}*₄.* The panel unit currents *i*_{*PV*.1} to *i*_{*PV*.4} have been displaced by offsets -100 A to -400 A, respectively, in order to make a distinction between the curves in Figure 3. As a result of the flow of the current *i_{PV,sum}*, a power *p_{INV}* can be supplied to the grid. The voltage controller can then be used to control a ramp-up of the power *p_{INV}.* The DC link voltage can be lowered in order to find a maximum power point (MPP) of the solar panel units.

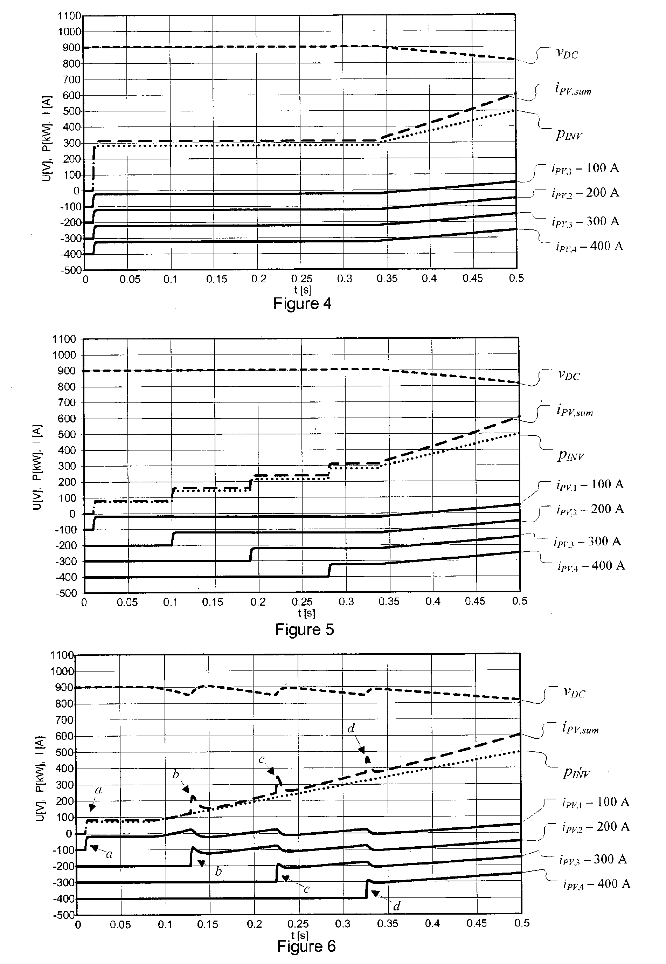

However, if the open-circuit voltage of the arrangement of the solar panel units is higher than a maximum allowable DC link voltage *v_{DC}*, it may be impossible to ramp up the supplied power. Figure 4 illustrates an exemplary start-up situation for the embodiment of Figure 2 where the maximum allowable DC link voltage *v_{DC}* is 900 V and the open-circuit voltage of the parallel-connected solar panel units is 1000 V. When the solar panel units are connected, a large step in current *i_{PV,sum}* can be seen. As the DC link voltage *v_{DC}* is at its maximum, no energy can be stored in the DC link. Thus, a corresponding step-wise change can also be seen in the power *P_{INV}* supplied to the grid.

German patent application DE 101 26 303 A1 discloses a method for verifying operation of electrical supply modules. The method involves detecting the operation of each electrical supply module at a defined time. Not more than one module commences operating at any time. The power component of each module is monitored when the module commences operating.

European patent application EP 2 061 43 A2 discloses a method to increase photovoltaic (PV) inverter efficiency. In the method, the power from a PV array is boosted from a predetermined voltage level to a predetermined DC link voltage. After the PV array has a predetermined voltage level at least as high as the DC link voltage, the boost is disabled.

### SUMMARY

An object of the present disclosure is to provide a method and an arrangement for implementing the method so as to alleviate the above disadvantages. The objects of the disclosure are achieved by a method and an arrangement which are characterized by what is stated in the independent claims. Preferred embodiments of the disclosure are disclosed in the dependent claims.

The invention is based on the idea of providing each solar panel unit with a switch through which the unit can be connected to an inverter. By sequencing the connection of the solar panel units, a step-wise change in power supplied by the inverter can be minimized in a start-up situation. The step in power may be further minimized by controlling the level of the DC link voltage at the same time.

### BRIEF DESCRIPTION OF THE DRAWINGS

In the following the invention will be described in greater detail by means of preferred embodiments with reference to the attached drawings, in which
Figure 1 illustrates current and power curves of a typical solar panel;
Figure 2 illustrates an exemplary embodiment of solar power generation;
Figure 3 illustrates a simulated start-up situation for the embodiment of Figure 2;
Figure 4 illustrates another exemplary start-up situation for the embodiment of Figure 2;
Figure 5 illustrates an exemplary simulated start-up situation using a method according to the present disclosure;
Figure 6 illustrates an exemplary simulated start-up situation using a method according to the present disclosure;
Figure 7 illustrates an exemplary arrangement for connecting a plurality of solar panel units to an inverter; and
Figure 8 illustrates another arrangement for connecting a plurality of solar panel units to an inverter.

### DETAILED DESCRIPTION

Figure 5 illustrates an exemplary simulated start-up situation using a method according to the present disclosure. This method for connecting a plurality of solar panel units to an inverter may be used together with an arrangement comprising a plurality of switches. Each switch is configured to connect one of the solar panel units to a DC link of the inverter. Thus, the solar panel units may be connected to the DC link separately. The solar panel units produce a DC voltage and the inverter converts the DC voltage to an AC voltage which is then supplied to a grid. The inverter may comprise means for controlling a DC link voltage.

In Figure 5, the open-circuit voltage of the solar panel units is 1000 V and the DC link voltage *v_{DC}* is being controlled to its maximum at 900 V. In order to minimize a step-wise change in the power supplied to the grid, the solar panel units are connected to the DC link of the inverter in sequence by using the switches. In Figure 5, a current *i_{PV,sum}* increases in small steps, as the solar panel units are connected one after the other to the DC link. As the DC link voltage is held at its maximum, no energy is stored into the DC link and the power *p_{INV}* supplied to the grid by the inverter grows in small steps. However, the steps are smaller than when using a start-up method described in Figure 4.

In some embodiments, the above method may be used whether or not the solar panel unit voltages exceed the set maximum DC link voltage. In both cases, the switches may be switched in sequence to a conductive state. If the solar panel unit voltages are below the set maximum DC link voltage, the DC link voltage may be controlled to a level corresponding with that of the solar panel unit voltages. Otherwise, the DC link voltage may be controlled to its maximum level.

Alternatively, the method can be used only when any one of the solar panel unit voltages exceeds the set maximum DC link voltage. A method according to the present disclosure may comprise a step of determining if a solar panel unit voltage exceeds a set maximum DC link voltage. If it is determined that a solar panel unit voltage exceeds the set maximum DC link voltage, the solar panel units may be connected in sequence to the DC link of the inverter by using the switches.

The step-wise changes in the power supplied by the inverter at a start-up may be further minimized by controlling the DC link voltage when connecting solar panel units. Figure 6 illustrates an exemplary simulated start-up situation using a method according to the present disclosure where the DC link voltage *v_{DC}* is controlled. The switches are turned on one after another. As seen in Figure 6, turning on the switches causes step-wise changes *a*, *b*, *c* and *d* in the currents *i*_{*PV*,*sum*} and *i*_{*PV*.1} to *i*_{*PV*.4}. Also the power *p_{INV}* supplied to the grid through the inverter shows a step-wise change *a* when a first solar panel unit is connected to the DC link.

After the solar panel unit is connected, an amount of power drawn from the solar panel unit or units may be increased by lowering the DC link voltage *v_{DC}*, as in the embodiment of Figure 3. In Figure 6, as a voltage difference between the solar panel unit voltage and the DC link voltage *v_{DC}* increases, more power is transferred from the solar panels to the inverter. The growth of the *power P_{INV}* supplied to the grid may thus be controlled to be linear.

When another solar panel unit is connected to the DC link a step-wise change b can again be seen in the currents. However, as the DC link voltage *v_{DC}* no longer is at its maximum level, energy can be stored in the DC link. Instead of transferring all of the power produced by the solar panel units to the grid, a portion of the power is used to store energy in the DC link, thus raising the DC link voltage *v_{DC}*.

A voltage difference limit may be calculated such that a step-wise change in the power *p_{INV}* supplied to the grid can be avoided without the DC link voltage *v_{DC}* exceeding its maximum. The voltage difference limit may, for instance, determine a limit for a difference between the DC link voltage and the set maximum DC link voltage.

The voltage difference limit may, for instance, be calculated on the basis of a desired increase rate of the power *p_{INV}* supplied to the grid, an expected power produced by a solar panel unit to be connected and the capacitance of the DC link.

A new solar panel unit connected to the inverter increases the combined power supplied by the solar panel units. If the power *p_{INV}* increases at the desired rate, it reaches the power supplied by the solar panel units in a certain time. The voltage difference limit can be calculated such that the DC link voltage does not rise above the set maximum DC link voltage *v_{DC}* within this time.

After connecting a solar panel unit, the DC link voltage *v_{DC}* may be decreased, thus increasing the voltage difference between the DC link voltage *v_{DC}* and the set maximum DC link voltage. Another solar panel unit may be connected when the voltage difference has reached the calculated voltage difference limit. Thus, a linear growth of the power *p_{INV}* supplied to the grid may be achieved.

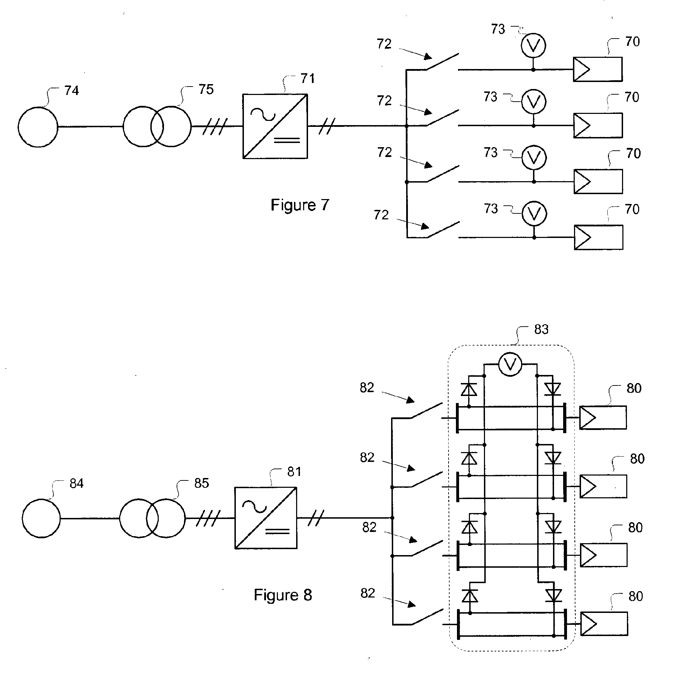

Figure 7 illustrates an exemplary arrangement for connecting a plurality of solar panel units 70 to an inverter 71. The arrangement comprises a plurality of switches 72, voltage sensors 73, and a control unit. The inverter 71 comprises a DC link and means for controlling a DC link voltage. The inverter 71 is connected to a grid 74 through a transformer 75 in Figure 7. Each switch 72 is configured to connect one of the solar panel units 70 to the DC link of the inverter 71.

Voltage sensors 73 are used to measure voltages of the solar panel units 70. The voltage of each solar panel unit is measured. The DC link voltage may be controlled on the basis of the measured voltages. If the voltages of solar panel units 70 are below the set maximum DC link voltage, the DC link voltage may be controlled to a level corresponding with that of the solar panel unit voltages. Otherwise, the DC link voltage may be controlled to its maximum level.

In Figure 7, the voltage sensors 73 are also used for determining if the voltage of any one of the solar panel units 70 exceeds the set maximum DC link voltage. The solar panel voltages measured using the voltage sensors 73 are compared with the DC link voltage. In a start-up situation, the control unit connects the solar panel units 70 to the DC link of the inverter 71 in sequence by using the switches 72 if the voltage of any one of the solar panel units exceeds the set maximum DC link voltage. The control unit may, for instance, be located in the inverter 71.

Figure 8 illustrates another arrangement for connecting a plurality of solar panel units 80 to an inverter 80 wherein the arrangement comprises means for measuring the highest solar panel unit voltage. The arrangement comprises a plurality of switches 82, a voltage sensor arrangement 83, and a control unit. The inverter 81 comprises a DC link and means for controlling a DC link voltage. The inverter 81 is connected to a grid 84 through a transformer 85. Each switch 82 is configured to connect one of the solar panel units 80 to the DC link of the inverter 41.

In the voltage sensor arrangement 83 of Figure 8, solar panel unit outputs are connected to a voltage sensor through diodes, so that the voltage sensor arrangement 83 measures the highest solar panel unit voltage. The measured voltage is used for determining if the voltage of any one of the solar panel units 80 exceeds the set maximum DC link voltage. In a start-up situation, the control unit connects the solar panel units 80 to the DC link of the inverter 81 in sequence by using the switches 82, if the voltage of any one of the solar panel units exceeds the set maximum DC link voltage. The control unit may, for instance, be located in the inverter 81.

The method and related apparatus are described above with reference to the respective functions they perform according to exemplary embodiments. It is to be understood that one or more of these elements and functions can be implemented in a hardware configuration. For example, the respective components may comprise a computer processor configured to execute computer-readable instructions (e.g. computer-readable software), a non-volatile computer-readable recording medium, such as a memory element (e.g. ROM, flash memory, optical memory, etc.) configured to store such computer-readable instructions, and a volatile computer-readable recording medium (e.g. RAM) configured to be utilized by the computer processor as working memory while executing the computer-readable instructions. The methods and related apparatuses may also be configured to sense, generate and/or operate in accordance with analog signals, digital signals and/or a combination of digital and analog signals to carry out their intended functions.

It will be obvious to a person skilled in the art that the inventive concept can be implemented in various ways. The invention and its embodiments are not limited to the examples described above but may vary within the scope of the claims.

## Claims

1. A method of connecting a plurality of solar panel units (70; 80) to an inverter (71; 81) in an arrangement comprising a plurality of switches (72; 82), wherein each switch (72; 82) is configured to connect one of the solar panel units (70; 80) to a DC link of the inverter (71; 81), wherein the inverter (71; 81) comprises means for controlling a DC link voltage, and wherein the method comprises
lowering the DC link voltage before connecting the solar panel units (70; 80) in sequence to the DC link of the inverter (71; 81) by using the switches (72; 82).

2. A method according to claim 1, wherein the method comprises determining if a solar panel unit voltage exceeds a set maximum DC link voltage,
connecting the solar panel units (70; 80) in sequence to the DC link of the inverter (71; 81) by using the switches if a solar panel unit voltage exceeds the set maximum DC link voltage.

3. A method according to claim 1 or 2, wherein the solar panel units (70; 80) are connected one after the other to the DC link of the inverter (71; 81).

4. A method according to any one of claims 1 to 3, wherein the method comprises
connecting a first solar panel unit (70; 80) to the DC link, and subsequently
calculating a voltage difference limit for a difference between the DC link voltage and the set maximum DC link voltage in order to avoid a step-wise change in the power supplied to the grid (74; 84),
increasing the voltage difference, and when the voltage difference has reached the voltage difference limit,
connecting another solar panel unit (70; 80).

5. An arrangement for connecting a plurality of solar panel units (70; 80) to an inverter (71; 81), the arrangement comprising
a plurality of switches (72; 82), wherein each switch (72; 82) is configured to connect one of the solar panel units (70; 80) to a DC link of the inverter (71; 81) wherein the inverter (71; 81) comprises means for controlling a DC link voltage, **characterized in that** the arrangement comprises
means configured to lower the DC link voltage before sequentially connecting the solar panel units (70;80) to the DC link of the inverter (71;81) by using the switches (72;82).

6. An arrangement according to claim 5, wherein the arrangement comprises means (73) for measuring the voltage of each solar panel unit (70).

7. An arrangement according to claim 5, wherein the arrangement comprises means (83) for measuring the highest solar panel unit voltage (80).

## Patentansprüche

1. Verfahren zum Anschließen einer Vielzahl von Solarpaneleinheiten (70; 80) an einen Wechselrichter (71; 81) in einer Anordnung, die eine Vielzahl von Schaltern (72; 82) aufweist, wobei jeder Schalter (72; 82) konfiguriert ist, eine der Solarpaneleinheiten (70; 80) an einen DC-Zwischenkreis des Wechselrichters (71; 81) anzuschließen, wobei der Wechselrichter (71; 81) Mittel zur Steuerung einer DC-Zwischenkreisspannung aufweist, und wobei bei dem Verfahren
die DC-Zwischenkreisspannung vermindert wird, bevor die Solarpaneleinheiten (70; 80) sequentiell an den DC-Zwischenkreis des Wechselrichters (71; 81) anhand der Schalter (72; 82) angeschlossen werden.

2. Verfahren nach Patentanspruch 1, wobei bei dem Verfahren
bestimmt wird, ob eine Spannung einer Solarpaneleinheit eine festgesetzte maximale DC-Zwischenkreisspannung überschreitet,
die Solarpaneleinheiten (70; 80) sequentiell an den DC-Zwischenkreis des Wechselrichters (71; 81) anhand der Schalter angeschlossen werden, falls eine Spannung einer Solarpaneleinheit die festgesetzte maximale DC-Zwischenkreisspannung überschreitet.

3. Verfahren nach Patentanspruch 1 oder 2, wobei die Solarpaneleinheiten (70; 80) nacheinander an den DC-Zwischenkreis des Wechselrichters (71; 81) angeschlossen werden.

4. Verfahren nach einem der Patentansprüche 1 bis 3, wobei bei dem Verfahren
eine erste Solarpaneleinheit (70; 80) an den DC-Zwischenkreis angeschlossen wird und anschließend
eine Spannungsunterschiedsgrenze für einen Unterschied zwischen der DC-Zwischenkreisspannung und der festgesetzten maximalen DC-Zwischenkreisspannung berechnet wird, um eine schrittweise Änderung in dem ins Netz (74; 84) eingespeisten Strom zu vermeiden,
der Spannungsunterschied vergrößert wird, und wenn der Spannungsunterschied die Spannungsunterschiedsgrenze erreicht hat,
eine andere Solarpaneleinheit (70; 80) angeschlossen wird.

5. Anordnung zum Anschließen einer Vielzahl von Solarpaneleinheiten (70; 80) an einen Wechselrichter (71; 81), welche Anordnung
eine Vielzahl von Schaltern (72; 82) aufweist, wobei jeder Schalter (72; 82) konfiguriert ist, eine der Solarpaneleinheiten (70; 80) an einen DC-Zwischenkreis des Wechselrichters (71; 81) anzuschließen, wobei der Wechselrichter (71; 81) Mittel zur Steuerung einer DC-Zwischenkreisspannung aufweist, **dadurch gekennzeichnet, dass** die Anordnung
Mittel aufweist, die konfiguriert sind, die DC-Zwischenkreisspannung zu vermindern, bevor die Solarpaneleinheiten (70; 80) sequentiell an den DC-Zwischenkreis des Wechselrichters (71; 81) anhand der Schalter (72; 82) angeschlossen werden.

6. Anordnung nach Patentanspruch 5, wobei die Anordnung Mittel (73) zur Messung der Spannung jeder Solarpaneleinheit (70) aufweist.

7. Anordnung nach Patentanspruch 5, wobei die Anordnung Mittel (83) zur Messung der höchsten Spannung einer Solarpaneleinheit (80) aufweist.

## Revendications

1. Procédé pour connecter une pluralité d'unités de panneaux solaires (70 ; 80) à un onduleur (71 ; 81) dans un agencement qui comprend une pluralité de commutateurs (72 ; 82), dans lequel chaque commutateur (72 ; 82) est configuré pour connecter l'une des unités de panneaux solaires (70 ; 80) à une liaison à courant continu de l'onduleur (71 ; 81), dans lequel l'onduleur (71 ; 81) comprend des moyens pour commander une tension de liaison à courant continu, et dans lequel le procédé comprend :
la réduction de la tension de liaison à courant continu avant de connecter les unités de panneaux solaires (70 ; 80) de manière séquentielle à la liaison à courant continu de l'onduleur (71 ; 81) en utilisant les commutateurs (72 ; 82).

2. Procédé selon la revendication 1, dans lequel le procédé comprend :
la détermination de si une tension d'une unité de panneau solaire dépasse une tension de liaison à courant continu maximale fixée ;
la connexion des unités de panneaux solaires (70 ; 80) de manière séquentielle à la liaison à courant continu de l'onduleur (71 ; 81) en utilisant les commutateurs si une tension d'unité de panneau solaire dépasse la tension de liaison à courant continu maximale fixée.

3. Procédé selon la revendication 1 ou 2, dans lequel les unités de panneaux solaires (70 ; 80) sont connectées les unes après les autres à la liaison à courant continu de l'onduleur (71 ; 81).

4. Procédé selon l'une quelconque des revendications 1 à 3, dans lequel le procédé comprend :
la connexion d'une première unité de panneau solaire (70 ; 80) à la liaison à courant continu, et ensuite :
le calcul d'une limite de différence de tension d'une différence entre la tension de liaison à courant continu et la tension de liaison à courant continu maximale fixée pour éviter une modification par étapes de la puissance fournie à la grille (74 ; 84) ;
l'augmentation de la différence de tension, et lorsque la différence de tension a atteint la limite de différence de tension ;
la connexion à une autre unité de panneau solaire (70 ; 80).

5. Agencement pour connecter une pluralité d'unités de panneaux solaires (70 ; 80) à un onduleur (71 ; 81), l'agencement comprenant :
une pluralité de commutateurs (72 ; 82), dans lequel chaque commutateur (72 ; 82) est configuré pour connecter l'une des unités de panneaux solaires (70 ; 80) à une liaison à courant continu de l'onduleur (71 ; 81), dans lequel l'onduleur (71 ; 81) comprend des moyens pour commander une tension de liaison à courant continu, **caractérisé en ce que** l'agencement comprend :
des moyens configurés pour abaisser la tension de liaison à courant continu avant de connecter de manière séquentielle les unités de panneaux solaires (70 ; 80) à la liaison à courant continu de l'onduleur (71 ; 81) en utilisant les commutateurs (72 ; 82).

6. Agencement selon la revendication 5, dans lequel l'agencement comprend des moyens (73) pour mesurer la tension de chaque unité de panneau solaire (70).

7. Agencement selon la revendication 5, dans lequel l'agencement comprend des moyens (83) pour mesurer la tension d'unité de panneau solaire (80) la plus élevée.
